# EUROPEAN PATENT APPLICATION

(11) **EP 0 629 010 A2**
(43) Date of publication of application: **14.12.1994**
(21) Application number: 94108117.6
(22) Date of filing: 26.05.1994
(51) Int. Cl.: H01M 2/04, H01M 2/40, H01M 2/36, H01M 4/22, H01M 2/12

(54) **Cover for a lead-acid battery**

(30) Priority: 04.06.1993 IT TO930403
(71) Applicant: SOCIETA'INDUSTRIALE ACCUMULATORI S.r.l., I-10125 Torino (IT)
(72) Inventor: Ghizzoni, Giulio Andrea, I-20094 Buccinasco (Milano) (IT); Possenti, Ildebrando, I-20060 Albignano d'Adda (Milano) (IT)
(74) Representative: Quinterno, Giuseppe

(57) **Abstract**

In its wall (3) the cover (1) has a first and a second header pipe (7, 8) from which respective pluralities of branch pipes (13, 14) emerge and protrude from the face of the cover (1) which is to face the interior of the battery container. The header pipes (7, 8) are accessible through corresponding respective apertures (9, 10) disposed in an outer surface of the cover (1) and can be used for the intake and re-intake of the electrolyte in the electrochemical process for forming the active material of the battery electrodes.

## Description

The subject of the present invention is a cover for a lead-acid starter battery, which, in known manner, comprises a rigid container substantially in the form of a tank and divided by baffles into a plurality of cells in each of which a plurality of electrode plates are accommodated immersed in an electrolyte and intended to be subjected to an electrochemical process for forming the active material, in which the battery is coupled to a system for recirculating and cooling the electrolyte present in the container.

The cover according to the invention is characterised in that, in its wall, it has a first and a second header pipe from which respective pluralities of branch pipes emerge, protruding from the face of the cover intended to face the interior of the battery container, in respective positions such that, when the cover is coupled to the container, at least one branch pipe from the first header pipe and at least one branch pipe from the second header pipe face each cell of the battery; these header pipes are accessible through corresponding respective apertures disposed in an outer surface of the cover.

Advantageously, the cover is made in a single part of moulded plastics material.

Preferably, the access apertures in the header pipes are adjacent one another and associated therewith is a single removable closing element having a passage in which a filtering element of porous material is disposed.

The header pipes can advantageously contain elements which can define a labyrinth path for the gases which are evolved when the electrolyte is in use and can restrain any particles of electrolyte carried by these gases.

The coupling of a battery provided with a cover according to the invention to a system for recirculating and cooling the electrolyte when the electrochemical process for forming the active material is being performed is extremely simple: the first header pipe is used as a pipe for drawing in the electrolyte from the battery cell whilst the second header pipe is used for conveying the treated electrolyte back to the cells.

Following the electrochemical formation of the active material, the access apertures in the above header pipes are closed again and these pipes advantageously act as breather pipes for the gases evolved when the electrolyte is in use.

The cover according to the invention has a small number of apertures giving access to the cells and a correspondingly small number of plugs. This can be brought about by means of a single moulding operation, resulting in a simple structure which is cheap to produce.

Further characteristics and advantages of the cover according to the invention will appear from the following detailed description, provided purely by way of non-limiting example, with reference to the appended drawings, in which:
- Figure 1 is a perspective view of a cover according to the invention;
- Figure 2 is a sectional view according to the line II-II in Figure 1;
- Figures 3 and 4 are sectional views along the lines III-III and IV-IV respectively of Figure 2;
- Figure 5 is a front view on enlarged scale of a detail shown by the arrow V in Figure 1;
- Figure 6 is a front view according to the arrow VI of Figure 1, of a closure plug associated with the cover;
- Figure 7 is a sectional view according to the line VII-VII of Figure 6; and
- Figure 8 is a perspective view showing an embodiment of an element shaped so as to define a labyrinth path in the header pipes of the cover according to the invention.

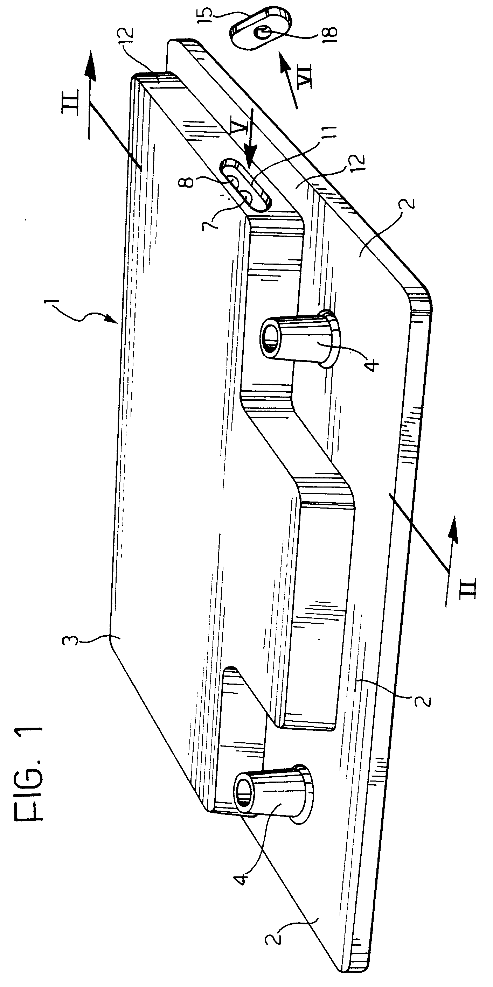

In Figures 1 to 5, a cover for a battery according to the invention is generally indicated 1. This cover is advantageously produced by moulding a plastics material.

In the embodiment illustrated by way of example, the cover 1 is generally rectangular and has on its periphery an edge or flange 2 to be coupled and heat-sealed to the upper edge of a battery container, not shown.

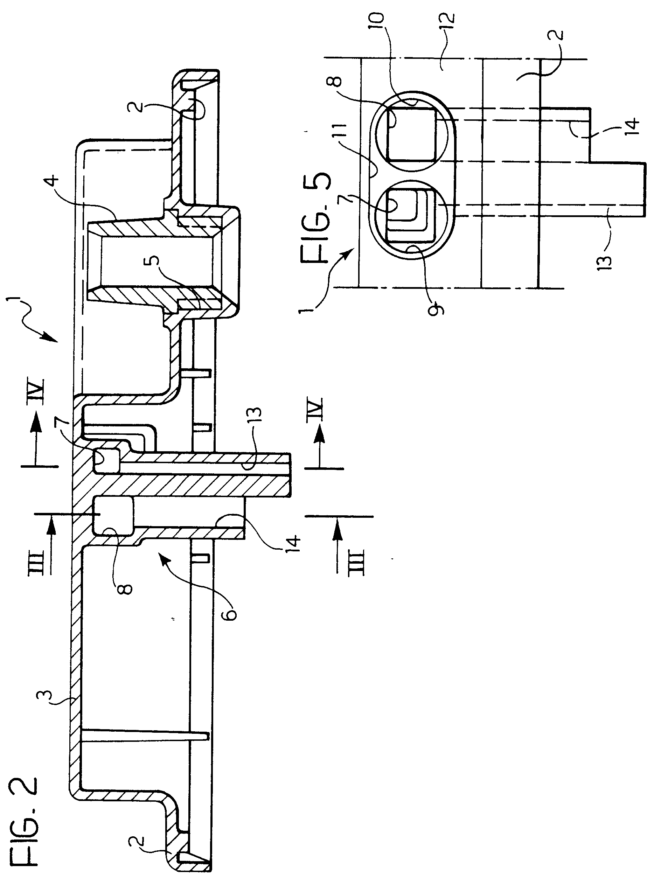

As can be seen in particular in Figure 1, in the embodiment illustrated, the cover 1 has a raised part 3 which is generally T-shaped in plan view. Adjacent this raised part of the cover, two tubular elements 4, defining passages or seats for the extension of a respective pole of the battery, extend from the lower part of the cover. As Figure 2 shows, each tubular element 4 is inserted in a corresponding aperture 5 in the cover.

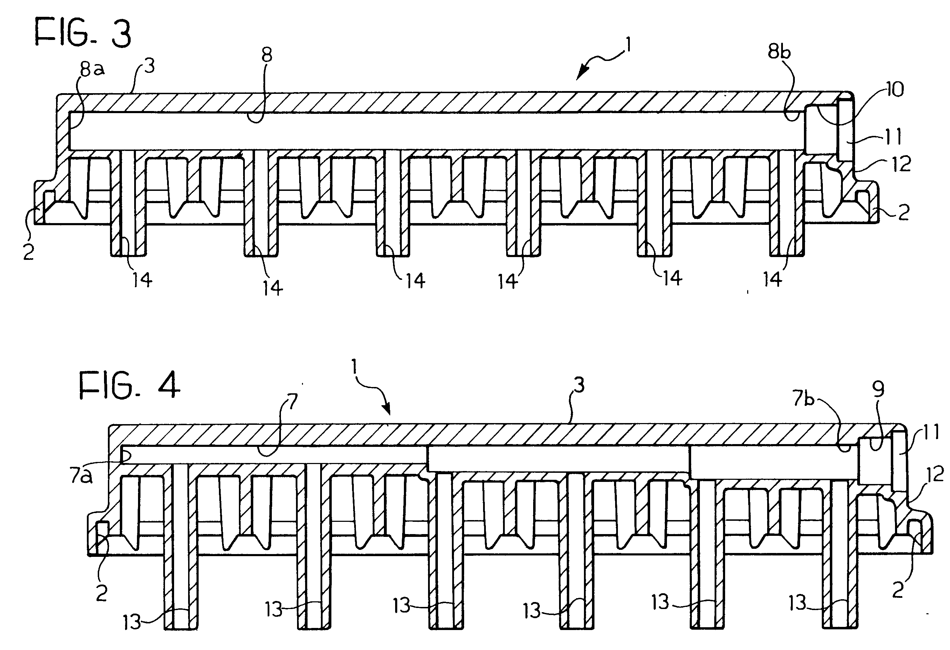

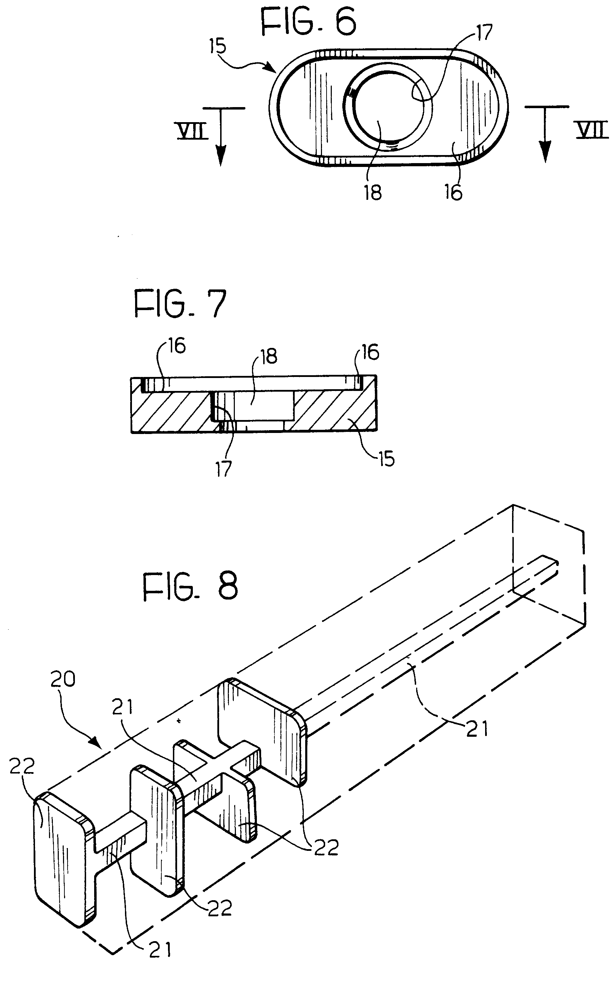

An integral formation, generally indicated 6 in Figure 2, extends from the lower face of the raised part 3 of the cover. This formation contains two header pipes 7 and 8 which are adjacent one another and extend parallel to the raised wall 3 of the cover. As is shown in Figures 3 and 4, the header pipes 7 and 8 have respective ends 7a and 8a which are blind. The other ends 7b and 8b of these header pipes communicate with respective apertures 9 and 10 which lead into a common embedded seat 11 produced in a side wall 12 which connects the raised wall 3 to the edge or flange 2 of the cover (see also Figures 1 and 5).

Respective pluralities of branch pipes 13 and 14 respectively emerge from the lower walls of the header pipes 7 and 8. In the embodiment illustrated, the branch pipes 13 and 14 extend at right-angles to the axes of the associated header pipes 7 and 8.

The branch pipes 13 preferably have an extension which is greater than the branch pipes 14, as shown in the drawings.

A closure element or plug 15 (Figures 1, 6 and 7) of complementary shape is associated with the seat 11 of the cover. The face of this plug which is to face the header pipes 7 and 8 has a recess indicated 16 in Figures 6 and 7.

The plug 15 has a central aperture 17 in which a pad 18 of porous material is disposed.

In a battery provided with a cover of the type described above, the header pipes 7 and 8 enable an electrochemical process for forming the active material of the plates to be performed easily. For this purpose, these header pipes are connected to an external system for recirculating, cooling and controlling the density of the electrolyte, external to the battery, by two tubes (not illustrated). During this operation, the pipe 7 acts as a collector for drawing in the electrolyte to the processing system, whilst the pipe 8 acts a collector for conveying the treated electrolyte back to the battery cells.

The length of the branch pipes 13 of the intake collector 7 is such that, at the end of the formation process, the level of the electrolyte in the battery reaches the lower end of the pipe. After the formation, the level of the electrolyte in the battery progressively drops, following its degassification, by a substantially predetermined measure, generally of the order of a few millimetres. The length of the branch pipes 13 thus indirectly determines the definitive level of the electrolyte in a battery.

When the electrochemical formation of the active material associated with the battery electrodes has been completed, the seat 11 of the cover is closed with the plug 15 and, when the battery is subsequently used, the header pipes 7 and 8 advantageously act as breather pipe manifolds for the gases evolved from the electrolyte. These gases are vented to the exterior of the battery through the porous pad 18 carried by the plug 15.

Advantageously, in order to restrain any particles of electrolyte which these gases may entrain, respective shaped elements, capable of defining a labyrinth path for these gases, can be disposed in the header pipes 7 and 8. One embodiment of such an element is shown in Figure 8. In the embodiment illustrated in this drawing, the shaped element 20 substantially has a rod 21 from which transverse walls 22 extend which are at an axial spacing along the rod and offset transversely and at an angle, so as to define respective labyrinth paths for the gases inside the associated header pipes 7 and 8. Any particles of electrolyte conveyed by these gases condense on the walls 22.

Naturally, the principle of the invention remaining the same, the forms of embodiment and details of production can be widely varied with respect to what has been described and illustrated purely by way of non-limiting example, without departing from the scope of the present invention.

Thus, for example, the access apertures in the header pipes can be produced at a spacing from one another and provided with respective closure elements which can vent the gases evolved from the electrolyte.

The closure element or elements of the apertures can comprise a pad of porous material, as described above, or can consist of conventional plugs provided with breather pipes.

## Claims

1. A cover for a lead-acid starter battery which comprises in known manner a rigid container, substantially in the form of a tank, divided by baffles into a plurality of cells, in each of which is accommodated a plurality of electrode plates immersed in an electrolyte and intended to be subjected to an electrochemical formation process in which the battery is coupled to a system for recirculating and cooling the electrolyte present in the container; the cover (1) being characterised in that, in its wall (3), it has a first and a second header pipe (7, 8) from which respective pluralities of branch pipes (13, 14) protruding from the cover face (1) which is intended to face the interior of the battery container emerge, in respective positions such that, when the cover (1) is coupled to the container, at least one branch pipe from the first header pipe and at least one branch pipe from the second header pipe face each cell of the battery; the header pipes (7, 8) being accessible through corresponding respective apertures (9, 10) disposed in an outer surface of the cover (1).

2. A cover according to Claim 1, characterised in that the branch pipes (13) extending from the first header pipe (7) have an extension which is greater than that of the branch pipes (14) extending from the second header pipe (8).

3. A cover according to Claim 1 or 2, characterised in that it is produced in a single part of moulded plastics material.

4. A cover according to any one of the preceding claims, characterised in that the apertures (9, 10) in the header pipes (7, 8) are adjacent one another.

5. A cover according to Claim 4, characterised in that a single removable closure element (15) is associated with the apertures (9, 10).

6. A cover according to Claim 5, characterised in that the closure element (15) has a passage (17) in which a filtering element (18) of porous material is disposed.

7. A cover according to any one of the preceding claims, characterized in that the apertures (9, 10) of the header pipes (7, 8) are provided in a side surface (12) of the cover (1) such that the apertures (9, 10) are accessible on one side of the battery when the cover (1) is coupled to the container.

8. A cover according to any one of the preceding claims, characterised in that the header pipes (7, 8) are provided with shaped elements (20) which can define a labyrinth path for the gases evolved during use of the electrolyte and which can restrain any particles of electrolyte conveyed by these gases.
